# EUROPEAN PATENT SPECIFICATION

(11) **EP 1 915 008 B1**
(45) Date of publication and mention of the grant of the patent: **12.12.2012**
(21) Application number: 06022054.8
(22) Date of filing: 20.10.2006
(51) Int. Cl.: H04M 15/00

(54) **System for updating home zone areas due to network changes**
System zur Aktualisierung von Heimatzonen aufgrund von Netzveränderungen
Système de mise à jour de zones de résidence en raison de changements dans un réseau

(43) Date of publication of application: 23.04.2008
(73) Proprietor: Telefónica Germany GmbH & Co. OHG, 80992 München (DE)
(72) Inventor: Marsden, Roger, 81737 München (DE); Vilar, Sonia, 80801 München (DE)
(74) Representative: Herrmann, Uwe

(56) References cited:
- WO-A-00/65861
- WO-A-01/35683
- WO-A-99/20064
- DE-C1- 19 731 461
- US-A1- 2003 119 501

## Description

The present invention relates to a communications system for providing service to the users of the communications system by an air interface medium in a geographical area, said communications system comprising nodes and end user terminal devices, which nodes deliver radiation to the geographical area and provide the air interface for said terminal devices, wherein for at least some of the users one or more zones are provided in which location based billing and/or location based services which differ(s) from billing and/or services outside of the zone are offered to the user, said communications system further comprising determining means for determining whether the user is located in a zone and update means for updating said determining means.

For any given defined zone the effective boundary necessarily change over time, due to subsequent topological change of the network node infrastructure, i. e. new roll out, re-deployment or physical removal. A characteristic problem facing such locations/zones is that the network operator must continually re-assess and resynchronize in a timely way the location, i. e. the definition of the zone to any equipment which is affected with assessing whether or not the user is located in a zone.

DE 197 31 461 refers to tariff charging method for calls from mobile subscribers in radio network according to the preamble part of claim 1.

US 2003/0119501 discloses a method and system for automatically updating a home-zone list in a subscriber database as the configuration of a cell changes in a cellular mobile telecommunication system mounted with a home-zone service center.

It is the object of the present invention to provide a communications system which minimizes the likelihood of discrepancies between the actual network topology and the zone information which is used by said determining means.

This object is solved by a communications system with the features of claim 1. According to the present invention the update means are adapted to update said determining means in the due course prior to implementing changes of the nodes in the communications system. According to the present invention at least some of the updates are forwarded to the determining means before the respective changes of the nodes in the communications system are implemented, i. e. turned on.

The determining means may be located in the network and/or in the terminal devices. Where an indication (visual or audible) is rendered via an end user equipment it is advantageous to maintain a stored definition of the zone locally at the end user equipment and further to provide determining means at the end user equipment. The end user equipment comprises the device and a subscriber card (for example the SIM card) and the storage and/or the determining means may be located on the device and/or on said subscriber card.

As the end user equipment is not always available to be able to receive updates, in accordance to the present invention those updates are sent to the determining means in due course prior to implementing the changes in the network. Thus, it is ensured that an re-assessment and re-synchronisation is performed in a timely way for all of said determining means which are involved in the communications system.

Of course the determining means may alternatively or in addition be located in the network for example for providing a certain billing or providing certain services based upon location.

Since the update is performed in accordance with the present invention some time in advance the probability of service impact is minimized.

The present invention ensures a correct synchronisation of the radio network changes with regard to location based services.

The system may comprise a first database containing a node identifier and/or the location of nodes which are planned to become active or to be changed in the network. This database may further comprise nodes which are already active. Accordingly, this database may comprise nodes which have been planned in the past and are already active and nodes which are planned to become active or to be changed in a specific period of time in the short term, i. e. within an implementation period. This first database is normally part of the radio network planning system.

The present invention may further comprise a second database containing a node identifier and/or the location of nodes which are active in the network. Accordingly, this database shall contain all nodes which are resident in the network. The database preferably contains the node identifier and/or the physical location. The database is fed directly by the network elements and only contains nodes actually active on the live network. The database is normally part of the radio network management system.

In accordance to a further embodiment of the present invention the determining means comprises a third database wherein the update of the determining means is an update of this database. This database may be located in the network to provide the service and for example in the end user terminal device to provide the indication. The database comprises a definition of the zones for the users of the network and is used in order to determine whether or not the user is located in a zone or outside of a zone. If for example a new node shall be implemented into the network a database is updated by the update means which database may be located in the network and/or in the terminal device.

In accordance with a further embodiment of the present invention a database is provided which stores the time when a planned node is turned on in the network. This database may be identical to said second database. Accordingly, the second database comprises additional information which describes exactly when in the implementation period the planned nodes are physically implemented, i. e. turned on in the live network.

In accordance with a further embodiment of the present invention the update means comprises an application which compares the content of the first database containing the node identifier and/or the location of nodes which are planned to become active or to be changed in the network and all nodes planned to be kept active with the content of the third database containing the node identifier and/or the location of nodes which are active in the network or have been previously planned and are already part of the determining means. Additionally, a comparison is made between the contents of the first and second databases to check if the implemented data differ or not from the planned data. The application prepares a delta file comprising discrepancies between the three databases and updates the determining means based upon the delta file. If for example the first database comprises a new node identifier and location for a new node which is to be implemented into the network this new node identifier and location is detected and sent to the determining means, i. e. to the database thereof for update purposes.

In accordance with a further embodiment of the present invention the update means is adapted to update said determining means upon implementing changes of nodes in the communications system in case of deletion of a node from the network. A planned deletion of the node cannot be propagated immediately as the node is still active. Thus, in accordance with this embodiment of the present invention the nodes shall be deleted only when they are planned to be deleted, i. e. not present in the first database and they are really deleted from the radio network, i. e. from the second database which comprises node identifiers and/or location of existing nodes.

In accordance to a further embodiment of the present invention preferably after a predetermined time (for example a predetermined implementation period) it is verified whether the planned node change which has been updated to the determining means has actually been implemented, i. e. turned-on. If not, a further update may be sent to the determining means which removes inconsistencies between the planned, updated changes and the actual changes of the network.

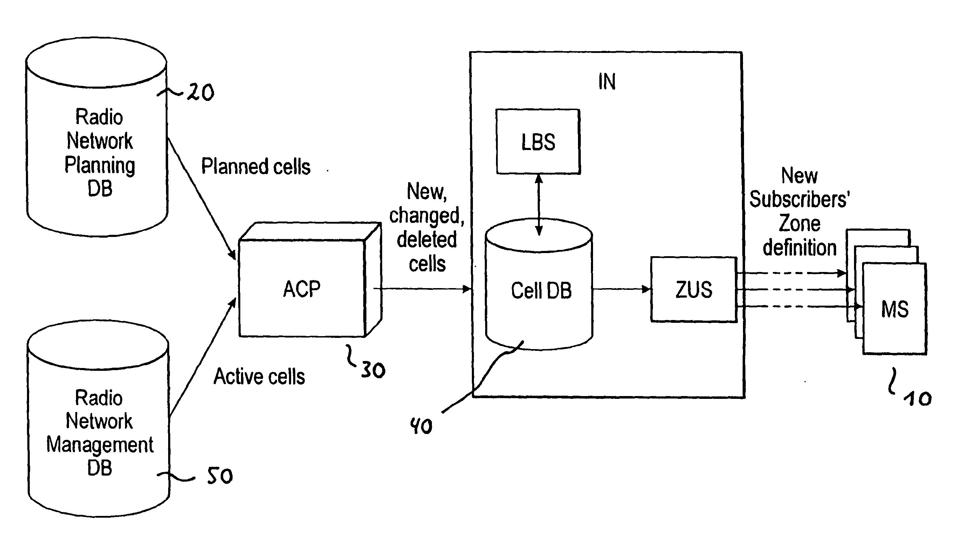

Further advantages and details of the present invention become evident from an embodiment which is shown in the figure. The figure shows a representation of an embodiment of the communications system in accordance with the present invention.

The present invention comprises a plurality of terminal devices 10 (MS) which in the device or on the SIM card store definitions of zones in which users are offered special tariffs and/or special services.

The terminal device 10 further comprises determining means for determining whether or not the user is located in such a zone. Indication may be provided to the user for indicating the result of this determination, i. e. for indicating whether or not the user is in a zone.

The communications network further comprises the intelligent network (IN) platform where the location based service LBS is operating. This location based service is communicating with a database 40. The database 40 communicates with the zone update service ZUS which is responsible for updating the end user equipments 10 regarding the definitions of the zones.

The communications system further comprises a first database 20 which contains all nodes planned in the network, at least containing the node identifier and the physical location. The database 20 is the master database and contains nodes planned to be active (changed and no changed nodes) in a specific period of time in the short term, i. e. in the implementation period.

The system further comprises a second database 50 which contains all nodes resident in the network at least containing the node identifier or the physical location.

The database 40 contains the node identifiers and the physical location attributes of all nodes planned and resident in the network offered to the user. As outlined above database 40 is used to provide the location based service. The primary key could be the node identifier, the physical location or both which constitutes different embodiments of the described inventive concept.

Database 40 is provisioned based on databases 20 and 50. In accordance with the present embodiment planned nodes which are contained in the first database 20 are necessary in case of location based service indication based on a zone definition stored at the end user equipment 10 so that the end user equipment 10 can be updated before these nodes are turned on or changed the live network. As mentioned above, the first database 20 contains planned data and the final implementation could differ due to multiple circumstances, i. g. planned location not suitable, human errors, technical problems, network element dependencies, etc. The communications system in accordance to the present invention therefore uses real active nodes data from the second database 50 to solve those possible discrepancies between the planned and the final actual implementation of the network. As outlined above, the second database 50 not only comprises all nodes resident in the network but also may comprise the time of when in the implementation period the planned nodes are physically implemented in the live network. In addition, the second database 50 exposes any cells removed from the network including temporary/mobile cells deployed for local events.

The nodes changes which may be the subject of an update may be for example new nodes, i. e. nodes having a new node identifier and location, re-parented nodes, i. e. nodes having the same location but a different node identifier, re-located nodes, i. e. nodes having the same node identifier but a differing location and deleted nodes, i. e. nodes from which the node identifier has to be deleted.

The propagation of these changes into the database 40 shall be the following:

In case of a new node the change is immediately propagated to database 40 based only on the first database 20 since it is not relevant when exactly the new node is turned on. The only requirement is that the IN-platform and the end user equipment 10 is aware of it some time in advance.

In case of re-parented and re-located nodes those changes are also propagated immediately based only on the first database 10 as it is not relevant when exactly the node is re-parented or re-located whenever old and new nodes are loaded on the database 40. Overwriting is ruled out as it is not possible to synchronize the node change with the end user equipment update. It is no problem to provision old and new nodes on the database 40 at least until the changes performed in the live network some time during the implementation period so that the service is provided correctly before and after the change.

The second database 50 may be periodically checked in order to determine whether or not the new planned node or the re-parented or re-located node has been actually implemented. If the planned change has been implemented no further action is necessary since for this case the second database 40 reflects the actual implementation. If not, a warning alarm may be raised in order to check if it is only a delay and the implementation will be done in the next cycle or if it has been cancelled and the databases 20 and 40 have to be updated accordingly.

In case of a deleted node this change of course cannot be propagated immediately since the node is still active in the live network. Accordingly, the node shall be deleted only when, besides it is planned to be turned off, it is really deleted from the radio network based on the second database 50.

As may be gathered from the figure the system further comprises an application 30 which combines the first database 20 with the second database 50 in order to generate a delta file on the basis of which changes are provisioned to the database 40. This application 30 shall populate all planned new, re-parented and re-located node changes found in the first database 20 to the database 40. The application 30 shall analyse the data of the second database 50 in order to get the information about when deletions are performed on the live network and to populate them to the database 40 as well as to include missing resident nodes in the first database 20 present in the second database, caused by inconsistencies between planned and implemented data. If the second database 50 contains node identifier and physical location then those inconsistencies can be directly provisioned into the database 40. Otherwise, error alarms can be raised so those inconsistencies are corrected in the first database 20 and then provisioned in the database 40.

In the following an example application of the communications system as shown in the figure is given. An operator defines a zone to a subscriber in its access network where said zone comprises one or more BTS and node B radio transceivers. As outlined above, first database 20 is the radio planning tool database. It provides a data export a minimum defined number of days in advance to the implementation period and the beginning of each radio roll out cycle. The second database 50 is the radio network management system database. It provides a daily data export of all resident cells in the access network in order to constantly check inconsistencies. Database 40 is maintained on an intelligent network (IN-platform) where the location based service LBS is operating. The location based service is communicating with said database 40 in order to determine whether or not the user is in a zone which information might be used for a certain billing and/or certain services offered to the user.

The system 30 is present in a separate platform called automatic cell provisioning ACP which sends to the intelligent network IN all changes to the network BTS/ node B topology.

Once the database 40 is updated these changes will be propagated to the effected end user equipments 10 regarding those subscribers whose zone definition is affected by the radio network changes.

In this example application primary key of data bases 20 and 40 is the node identifier and the second database 50 can only provide the node identifier and no location information. In the present example the node identifier is defined as the location area code (LAC) plus the cell identity (CI). Of course also other definitions of a node identifier are conceivable.

In this example application unit 30 shall process the planned cell changes as follows:
- New cell: Cell creation on the IN Cell DB 40.
- Re-parented cell (different LAC): As Node identifier is different it is equivalent to a cell creation on the IN Cell DB 40. Current and planned Node Identifier will coexist on the IN Cell DB 40 for a certain period of time; i.e. the same physical cell has multiple identifiers.
- Re-located cell (different location): As the primary key is the Node Identifier, it is needed that also a different Node Identifier is used in this case, so old and new entries can coexist. It is then equivalent as well to a cell creation; i.e. again the same physical cell has multiple identifiers.
- Deleted cell: No forecasted deletion is propagated to the IN Cell DB 40 until it is verified that the cell is not present any more on the Radio Network Management DB 50.

As the Radio Network Management DB 50 only contains the Node Identifier, inconsistencies with the Radio Network Planning DB 20 cannot be directly provisioned (location information is missing). Therefore, as a fallback protection, alarms are raised at the ACP to signal that the planning data should be re-synchronized. These inconsistencies and the correction time shall be minimized as they could have direct impact on the subscribers' service experience.

Through the concept of the present invention the determining means/location based services are synchronised with a radio network in automated way, and all the location features can be provided correctly even those based on a locally stored definition of the location at the end user equipment.

It has to be taken into account that as the update of the end user equipment 10 depends on its availability some temporal inaccuracy may be occur and is unavoidable. In cases changes implemented on the radio network after the database 40 is provisioned with such a change but before the end user 10 is updated there could be inconsistencies between the indication of the end user equipment 10 and the rest of the location service features. These inconsistencies shall be minimized through defining an appropriate time in advance to the implementation period when the planning data shall be provided based on a statistical analysis of end user availability.

## Claims

1. Communications system for providing service to users of the communications system by an air interface medium in a geographical area, said communications system comprising nodes and end user terminal devices (10), wherein said nodes deliver radiation to the geographical area and provide the air interface for said terminal devices (10), wherein for at least some of the users one or more zones are provided in which location based billing and/or location based services which differ(s) from billing and/or services outside of the zone are offered to the user, said communications system further comprising determining means for determining whether the user is located in a zone and update means for updating said determining means, wherein the update means is adapted to update said determining means prior to implementing changes of the nodes in the communications system,
**characterised in**
**that** the system comprises a first database (20) containing node identifiers and/or the locations of nodes which are planned to be active in the network at the end of the next implementation period and a second database (50) containing node identifiers and/or the locations of nodes which are active in the network and the determining means comprises a third database (40) wherein the update of the determining means is an update of said third database and wherein the third database is provisioned based on the first and second database.

2. Communications system according to claim 1, wherein the determining means are located in the network (IN) and/or in the terminal devices (10).

3. Communications system according to claim 1 or 2, wherein said nodes contained in the first database (20) are new nodes and/or re-parented nodes and/or re-located nodes or un-changed nodes.

4. Communications system according to any one of the preceding claims, wherein the system comprises means (30) for providing node identifiers and/or the location of nodes which are planned to become active or to be changed in the network to the determining means.

5. Communications system according to anyone of the preceding claims, wherein a database is provided which stores the information when a planned node is turned on in the network.

6. Communications system according to claim 5, wherein said database is said second database (50).

7. Communications system according to any one of the preceding claims wherein the update means comprises an application (30) which compares the content of the first database (20) containing the node identifier and/or the location of nodes which are planned to be active in the network with the content of the second database (50) containing the node identifier and/or the location of nodes which are active in the network and with the content of the third database (40) containing the node identifier and the location of nodes which are part of the current determining means, which application (30) prepares a delta file comprising discrepancies between the databases (20, 40 and 50) and which updates the determining means based upon the delta file.

8. Communications system according to any one of the preceding claims wherein the update means is adapted to update said determining means simultaneously with implementing changes of the nodes in the communications system in case of deletion of a node from the network.

9. Communications system according to any one of the preceding claims wherein the system comprises means for verifying in the second data base (50) whether or not an updated planned node change has actually been implemented and wherein said means are adapted to again update the determining means if the planned updated node change has not been implemented.

10. Communications system according to claim 9 wherein the verification is performed after a specific period of time, minimum after the established implementation period.

## Patentansprüche

1. Kommunikationssystem zum Bereitstellen von Dienst an Nutzer des Kommunikationssystems durch ein Luftschnittstellenmedium in einem geographischen Gebiet, wobei das Kommunikationssystem Netzknoten und Endnutzer-Endgeräte (10) umfasst, wobei die Netzknoten dem geographischen Gebiet Strahlung liefern und die Luftschnittstelle für die Endgeräte (10) bereitstellen, wobei für mindestens einige der Nutzer eine oder mehrere Zonen vorgesehen werden, in denen dem Nutzer eine standortabhängige Vergebührung und/oder standortabhängige Dienste, die sich von der Vergebührung und/oder den Diensten außerhalb der Zone unterscheidet/unterscheiden, geboten werden, wobei das Kommunikationssystem weiterhin Ermittlungsmittel zum Ermitteln, ob sich der Nutzer in einer Zone befindet, und Aktualisierungsmittel zum Aktualisieren des Ermittlungsmittels umfasst, wobei das Aktualisierungsmittel ausgelegt ist, um das Ermittlungsmittel vor dem Implementieren von Veränderungen der Netzknoten in dem Kommunikationssystem zu aktualisieren,
**dadurch gekennzeichnet, dass**
das System eine erste Datenbank (20), die Netzknotenkennungen und/oder die Standorte von Netzknoten, die in dem Netz zum Ende des nächsten Implementierungszeitraums als aktiv geplant sind, enthält, und eine zweite Datenbank (50), die Netzknotenkennungen und/oder Standorte von Netzknoten, die in dem Netz aktiv sind, umfasst und dass das Ermittlungsmittel eine dritte Datenbank (40) umfasst, wobei die Aktualisierung des Ermittlungsmittels eine Aktualisierung der dritten Datenbank ist und wobei die dritte Datenbank beruhend auf der ersten und zweiten Datenbank versorgt wird.

2. Kommunikationssystem nach Anspruch 1, wobei sich die Ermittlungsmittel in dem Netzwerk (IN) und/oder in den Endgeräten (10) befinden.

3. Kommunikationssystem nach Anspruch 1 oder 2, wobei die in der ersten Datenbank (20) enthaltenen Netzknoten neue Netzknoten und/oder neu zugewiesene Netzknoten und/oder Netzknoten geänderten Standorts oder unveränderte Netzknoten sind.

4. Kommunikationssystem nach einem der vorhergehenden Ansprüche, wobei das System Mittel (30) zum Liefern von Netzknotenkennungen und/oder des Standorts der Netzknoten, die in dem Netz planmäßig aktiv oder geändert werden sollen, an das Ermittlungsmittel umfasst.

5. Kommunikationssystem nach einem der vorhergehenden Ansprüche, wobei eine Datenbank vorgesehen ist, die die Informationen speichert, wenn ein geplanter Netzknoten in dem Netz eingeschaltet wird.

6. Kommunikationssystem nach Anspruch 5, wobei die Datenbank die zweite Datenbank (50) ist.

7. Kommunikationssystem nach einem der vorhergehenden Ansprüche, wobei das Aktualisierungsmittel eine Anwendung (30) umfasst, die den Inhalt der ersten Datenbank (20), die die Netzknotenkennung und/oder den Standort von Netzknoten enthält, die in dem Netz als aktiv geplant sind, mit dem Inhalt der zweiten Datenbank (50), die die Netzknotenkennung und/oder den Standort von Netzknoten, die in dem Netz aktiv sind, enthält, und mit dem Inhalt der dritten Datenbank (40), die die Netzknotenkennung und den Standort von Netzknoten, die Teil des aktuellen Ermittlungsmittels sind, enthält, vergleicht, wobei die Anwendung (30) eine Deltadatei erzeugt, die Abweichungen zwischen den Datenbanken (20, 40 und 50) umfasst, und das Ermittlungsmittel beruhend auf der Deltadatei aktualisiert.

8. Kommunikationssystem nach einem der vorhergehenden Ansprüche, wobei das Aktualisierungsmittel ausgelegt ist, um das Ermittlungsmittel gleichzeitig mit dem Implementieren von Veränderungen der Netzknoten in dem Kommunikationssystem im Fall eines Löschens eines Netzknotens aus dem Netz zu aktualisieren.

9. Kommunikationssystem nach einem der vorhergehenden Ansprüche, wobei das System Mittel zum Prüfen in der zweiten Datenbank (50) umfasst, ob eine aktualisierte geplante Netzknotenveränderung tatsächlich implementiert wurde oder nicht, und wobei die Mittel ausgelegt sind, um das Ermittlungsmittel erneut zu aktualisieren, wenn die geplante aktualisierte Netzknotenveränderung nicht implementiert wurde.

10. Kommunikationssystem nach Anspruch 9, wobei die Prüfung nach einem bestimmten Zeitraum, mindestens nach dem festgelegten Implementierungszeitraum, durchgeführt wird.

## Revendications

1. Système de communication destiné à fournir des services aux utilisateurs du système de communication par un format d'interface aérienne dans une région géographique, ledit système de communication comprenant des noeuds et des dispositifs terminaux pour utilisateur final (10), dans lequel lesdits noeuds livrent un rayonnement à la région géographique et fournissent l'interface aérienne pour lesdits dispositifs terminaux (10), dans lesquels, pour au moins quelques-uns des utilisateurs, une ou plusieurs zones sont fournies, dans lesquelles la facturation basée sur la localisation et/ou les services basés sur la localisation, qui diffèrent de la facturation et/ou des services en dehors de la zone, sont proposés à l'utilisateur, ledit système de communication comprenant par ailleurs des moyens de détermination destiné à déterminer si l'utilisateur est localisé dans une zone et un moyen d'actualisation destiné à actualiser lesdits moyens de détermination, dans lequel le moyen d'actualisation est adapté à actualiser lesdits moyens de détermination avant de mettre en application les modifications des noeuds dans le système de communication,
**caractérisé**
**en ce que** le système comprend une première base de données (20) contenant des identificateurs de noeuds et/ou les localisations des noeuds qui sont prévus être actifs dans le réseau à la fin de la prochaine période de mise en application et une seconde base de données (50) contenant des identificateurs de noeuds et/ou les localisations des noeuds qui sont actifs dans le réseau et en ce que le moyen de détermination comprend une troisième base de données (40), dans laquelle l'actualisation des moyens de détermination est une actualisation de ladite troisième base de données et dans laquelle la troisième base de données est fournie en se basant sur la première et la seconde base de données.

2. Système de communication selon la revendication 1, dans lequel les moyens de détermination sont localisés dans le réseau (IN) et/ou dans les dispositifs terminaux (10).

3. Système de communication selon les revendications 1 ou 2, dans lequel lesdits noeuds contenus dans la première base de données (20) sont des nouveaux noeuds et/ou des noeuds ré-apparentés et/ou des noeuds relocalisés ou des noeuds inchangés.

4. Système de communication selon une quelconque des revendications précédentes, dans lequel le système comprend des moyens (30) destinés à fournir des identificateurs de noeuds et/ou la localisation des noeuds qui sont prévus devenir actifs ou être modifiés dans le réseau relatif aux moyens de détermination.

5. Système de communication selon une quelconque des revendications précédentes, dans lequel une base de données est fournie, qui stocke les informations lorsqu'un noeud prévu est enclenché dans le réseau.

6. Système de communication selon la revendication 5, dans lequel ladite base de données est ladite seconde base de données (50).

7. Système de communication selon une quelconque des revendications précédentes, dans lequel le moyen d'actualisation comprend une application (30) qui compare le contenu de la première base de données (20) contenant l'identificateur de noeud et/ou la localisation des noeuds qui sont prévus être actifs dans le réseau avec le contenu de la seconde base de données (50) contenant l'identificateur de noeud et/ou la localisation des noeuds qui sont actifs dans le réseau et avec le contenu de la troisième base de données (40) contenant l'identificateur de noeud et la localisation des noeuds qui font partie des moyens de détermination actuels, dont l'application (30) prépare un fichier delta comprenant des divergences entre les bases de données (20, 40 et 50) et qui actualise les moyens de détermination en se basant sur le fichier delta.

8. Système de communication selon une quelconque des revendications précédentes, dans lequel le moyen d'actualisation est adapté à actualiser lesdits moyens de détermination simultanément avec la mise en application des noeuds dans le système de communication en cas d'effacement d'un noeud à partir du réseau.

9. Système de communication selon une quelconque des revendications précédentes, dans lequel le système comprend des moyens destinés à vérifier dans la seconde base de données (50) si une modification de noeud prévu actualisée a été effectivement mise en application ou non et dans lequel lesdits moyens sont adaptés à réactualiser les moyens de détermination si la modification de noeud prévu actualisée n'a pas été mise en application.

10. Système de communication selon la revendication 9, dans lequel la vérification est exécutée après une période spécifique de temps, mais au minimum après la période de mise en application établie.
